# EUROPÄISCHE PATENTSCHRIFT

(11) **EP 3 279 055 B1**
(45) Veröffentlichungstag und Bekanntmachung des Hinweises auf die Patenterteilung: **24.02.2021**
(21) Anmeldenummer: 17184919.3
(22) Anmeldetag: 04.08.2017
(51) Int. Cl.: B61D 17/10, B32B 3/02, B32B 3/12, B32B 3/26, B32B 5/00, B32B 5/02, B32B 5/18, B32B 5/24, B32B 7/12, B32B 27/06, B32B 27/42, B60H 1/22, B61D 27/00, B32B 27/12

(54) **SANDWICHPANEEL MIT HEIZFUNKTION FÜR FAHRZEUGE**
SANDWICH PANEL WITH HEATING FUNCTION FOR VEHICLES
PANNEAU EN SANDWICH AYANT UNE FONCTION DE CHAUFFAGE POUR VÉHICULES

(30) Priorität: 04.08.2016 LU 93165
(43) Veröffentlichungstag der Anmeldung: 07.02.2018
(73) Patentinhaber: Euro-Composites S.A., 6401 Echternach (LU)
(72) Erfinder: ALTER, Rolf-Mathias, 6419 Echternach (LU); DÖREN, Marc, 54317 Gutweiler (DE); THIELEN, Thomas, 54298 Aach (DE)
(74) Vertreter: Lippert Stachow Patentanwälte Rechtsanwälte

(56) Entgegenhaltungen:
- EP-A1- 2 955 975
- WO-A1-2013/110763
- DE-A1- 19 647 935
- DE-A1-102006 012 647
- DE-A1-102010 046 079
- DE-A1-102013 100 792
- DE-U1- 29 812 814
- US-A- 3 697 728

## Beschreibung

### TECHNISCHES GEBIET

Die Erfindung betrifft allgemein ein Sandwichpaneel mit Heizfunktion für ein Fahrzeug, insbesondere für ein Schienenfahrzeug. Unter dem Begriff Sandwichpaneel wird ein Verbundbauteil in Sandwichbauweise verstanden, das einen zwischen zwei Deckschichten angeordneten Kern in Leichtbauweise aufweist. Das Sandwichpaneel soll vorliegend insbesondere als Strukturbauteil - d.h. zur Kraftaufnahme, insbesondere mit gewichtstragender Eigenschaft - im Fahrzeugbau verwendbar sein. Unter dem Begriff Fahrzeuge werden insbesondere Schienenfahrzeuge verstanden. Straßenfahrzeuge oder Flugzeuge kommen ebenfalls in Betracht.

Die Erfindung betrifft speziell ein mit einer elektrischen Heizfunktion versehenes derartiges Sandwichpaneel. Der Schichtaufbau umfasst dabei in der gattungsgemäßen Sandwichbauweise zumindest eine obere Deckschicht, eine untere Deckschicht und den zwischen beiden angeordneten Sandwichkern. Zur Erzielung der Heizfunktion ist ferner mindestens eine elektrisch wirkende Heizschicht nach dem Prinzip eines Heizwiderstands vorgesehen.

### STAND DER TECHNIK

Ein gattungsfremdes, nicht-elektrisches Sandwichpaneel mit Heizfunktion ist aus der Patentanmeldung EP 0 890 797 A2 bekannt. Dieses als Klimatisierungselement verwendbare Sandwichpaneel ist als vollmetallisches Sandwich mit einem Leichtkern aus gewelltem Aluminium aufgebaut. Die zwischen dem gewellten Aluminium und den Deckschichten ausgebildeten Kanäle dienen als Leitungen für gasförmige oder flüssige Medien zum Heizen (oder Kühlen). Die hierfür erforderliche Anschlusstechnik ist aufwendig. Mit einer Verwendung als Strukturbauteil geht das erhebliche Risiko einher, dass durch einen Leitungsbruch Gas oder Flüssigkeit, ggf. auf Vorlauftemperatur erhitzte Flüssigkeit, aus den Kanälen des Paneels in den Fahrgastbereich austritt.

Aus der Patentanmeldung EP 0 859 200 A2 geht ein Heizpaneel in Sandwichbauweise mit elektrischer Heizwirkung hervor. Hierbei sind elektrische PTC-Heizelemente an einer zusätzlichen Heizplatte an einer Seite des Sandwichpaneels vorgesehen. Diese Bauweise ist zwar weniger risikoträchtig und wartungsfreundlicher, jedoch in der Herstellung weiterhin recht aufwendig. Zudem erfordert sie zusätzliche Bauhöhe innerhalb des Fahrzeugs.

Aus der Gebrauchsmusteranmeldung DE 29812814 U1 sind Modulplatten zur Fußboden- oder Wandheizung in Gebäuden mit einer elektrischen Heizschicht in Form von einem leitfähigen Kohlenstoff-Faser-Gewebe eingebettet in eine Schicht aus Mörtel oder Klebemittel bekannt. Dabei wird ein Kern in Form einer vakuumierten Umhüllung aus Stahl gefüllt mit Wärmedämmstoff, und eine begehbare Abdeckschicht, z.B. in Form von Fliesen, Steinplatten, oder dgl. vorgeschlagen.

Aus der Patentanmeldung WO 2011/032823 A2 ist ein dreischichtiger Fußboden für Schienenfahrzeuge bekannt. Eine Heizschicht ist auf einer Deckschicht eines Paneels unterhalb einer zusätzlichen Nutzschicht vorgesehen ist. Als Heizschicht wird eine handelsübliche elektrische Flächenheizung, z.B. eine elektrische Heizmatte, vorgeschlagen. Nähere Einzelheiten werden nicht offenbart.

Aus der Patentanmeldung WO 2010/133308 A1 ist eine Heizeinrichtung für Schienenfahrzeuge vorbekannt. Hierin kann insbesondere ein Sandwichpaneel gemäß der Patentanmeldung EP 2 332 800 A2 desselben Anmelders zum Einsatz kommen.

Aus der Patentschrift US 3,697,728 ist ein Sandwichpaneel mit Heizfunktion zur Fußboden- und Wandheizung in Flugzeugen in Flugzeugen bekannt. Das Sandwichpaneel umfasst zwei Deckschichten z.B. aus Aluminium oder einem Glasfaser-Verbund-Kunststoff, zwischen denen eine Heizfolie vorgesehen ist. Die Heizfolie besteht aus Kohlenstoff-Partikeln dispergiert in einer glasfaserverstärkten Matrix. Dieses Paneel hat ferner einen Sandwichkern aus Wabe oder Schaumstoff.

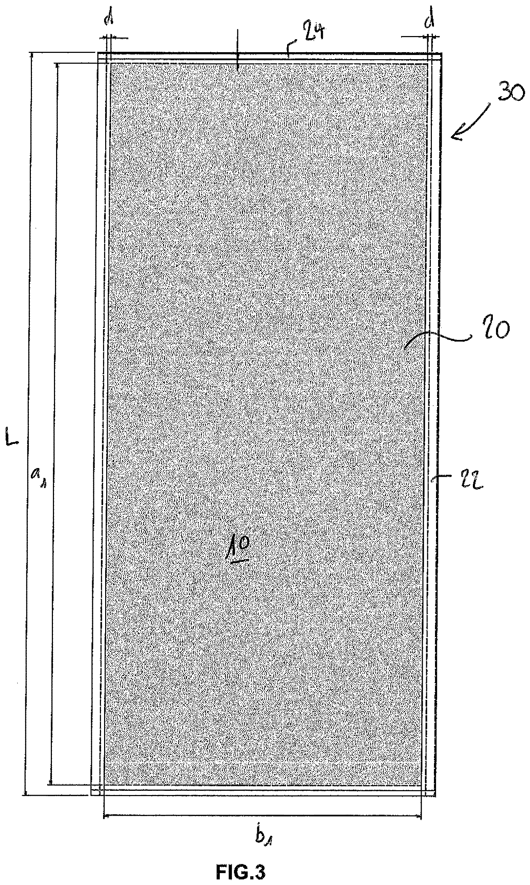

Die EP 2 332 800 A2 beschreibt ein gattungsgemäßes Sandwichpaneel mit Heizfunktion für ein Schienenfahrzeug. Es wird ein Verbundelement in Sandwichbauweise vorgeschlagen, mit einer oberen Deckplatte, einer unteren Deckplatte und einem dazwischen angeordneten flächenartigen elektrischen Heizelement. Als Heizelement wird eine Heizfolie vorgeschlagen mit jeweils getrennt voneinander, schlangenförmig bzw. mäanderförmig verlaufenden Heizdrähten (s. dort Fig.3). Derartige elektrische Heizfilme finden bereits in vielen Fahrzeugtypen Anwendung. So beschreibt beispielsweise die Patentanmeldung WO 2012/045930 A1 einen Heizfilm speziell für Dreiphasenstrom zur Verwendung in einem Zug.

Auch in Flugzeugen werden derartige Heizfilme insbesondere auch in Sandwichpaneelen mit Heizfunktion eingesetzt, wie z.B. in der Patentanmeldung WO 01/17850 A1 vorgeschlagen.

Die DE 102006012647 A1 beschreibt ein Sandwichpaneel zur Fußbodenheizung in Flugzeugen mit einer elektrischen Heizschicht in Form von dünnem Glasgewebe mit einer leitfähigen Metalloxidbeschichtung. Die Heizschicht ist dabei integriert zwischen zwei Prepreg-Schichten mit Epoxid- oder Phenolharz (Thermoset-Harze). Dieses Paneel hat ferner einen Wabenkern aus harzverstärktem Papier und weitere Prepreg-Schichten.

### AUFGABE DER ERFINDUNG

Ausgehend vom vorstehenden Stand der Technik liegt eine erste Aufgabe der Erfindung mithin darin, ein möglichst kompaktes und zuverlässiges Sandwichpaneel mit Heizfunktion vorzuschlagen.

Eine weitere Aufgabe kann darin liegen, eine verhältnismäßig preisgünstige Herstellung insbesondere durch Vereinfachung in Aufbau und/oder bei der Anschlusstechnik zu erzielen.

Ferner kann eine zusätzliche Aufgabe darin liegen, ein insgesamt robusteres Sandwichpaneel mit Heizfunktion vorzuschlagen, das gegenüber nachträglichen Veränderungen, wie beispielsweise dem nachträglichen Anbringen von strukturellen Verbindungspunkten, oder auch gegen lokal begrenzte Beschädigungen tolerant ist. Das Sandwichpaneel soll vorzugsweise auch eine nachträgliche mechanische Bearbeitung ohne spürbare Beeinträchtigung der Heizschicht gestatten.

Zumindest die erstgenannte Aufgabe wird durch ein Sandwichpaneel mit dem Merkmal nach Anspruch 1 gelöst. Weitere vorteilhafte Ausbildungen - auch mit Blick auf die optionalen zusätzlichen Aufgabenstellungen - sind den Unteransprüchen 2 bis 14 und dem Verwendungsanspruch 15 zu entnehmen.

### ALLGEMEINE BESCHREIBUNG DER ERFINDUNG

Das Sandwichpaneel mit Heizfunktion ist für ein Fahrzeug bestimmt, insbesondere als Strukturbauteil mit kraftübertragender bzw. gewichtstragender Eigenschaft und umfasst einen Schichtaufbau in Sandwichbauweise. Der Schichtaufbau hat zumindest eine obere Deckschicht, eine untere Deckschicht sowie, zwischen den Deckschichten angeordnet, mindestens eine Heizschicht, welche als elektrischer Heizwiderstand verwendbar ist, sowie einen Sandwichkern in Leichtbauweise, beispielsweise einen Schaumkern oder Wabenkern, wobei der Kern typisch eine erheblich geringere Massendichte im Vergleich zu den Deckschichten hat, jedoch eine spürbare Verstärkung zumindest gegen Druckbelastung bzw. gegen Durchbiegung bildet.

Erfindungsgemäß wird als Heizschicht keine herkömmliche Heizfolie mit einzelnen ausgeprägten Leiterbahnen mit vorbestimmtem Verlauf verwendet. Vielmehr sieht die Erfindung als Heizschicht ein flächiges Fasernetz aus einer Vielzahl elektrisch leitfähigen Fasern vor, die insgesamt wie ein flächiger elektrischer Heizwiderstand wirken, und in einer Polymer-Matrix aus einem Thermoplast eingebettet sind.

Aufgrund der bei typischen vernetzten Faserstrukturen inhärent hohen Anzahl an Verbindungen, d.h. Verbindungsstellen zwischen den einzelnen Fasern ("Netzknoten") wird auf besonders einfache Weise ein ausfallrobuster flächiger Heizwiderstand realisiert. Als Fasernetz kommen dabei alle bekannten Strukturen in Betracht, insbesondere nicht gewebte (non-woven) Textilien, beispielsweise ein Vlies, ein Gelege, oder ein Filz, wobei lediglich eine hinreichende elektrische Kontaktierung im Mittel an einem Anteil der "Netzknoten" vorliegen soll und es wegen der schieren Anzahl der Fasern auch auf einen vorbestimmten Verlauf grundsätzliche nicht ankommt. Auch Gewebe und dgl. kommen jedoch als Fasernetz in Betracht, z.B. ein Geflecht, Gewirk oder Gestrick.

Die Herstellungsart des Fasernetzes an sich ist nicht entscheidend, es sollte lediglich eine der gewünschten Heizleistung angepasste gemittelte Flächendichte der Fasern gewählt werden. Der elektrische Widerstand ist ferner Funktion insbesondere des Fasermaterials und der Faserstärke. Die Heizfunktion wird durch Umwandlung von elektrischer Energie in Wärme (joulesche Wärme) aufgrund eines über das Fasernetz verteilten Stromflusses realisiert, wodurch bereits eine gleichmäßigere Wärmeverteilung und daher auch eine besser Dauerbeständigkeit des Sandwichverbunds erzielt wird.

Besonders bevorzugt wird als netzartige Struktur ein Faservlies, d.h. ein flächiges Gebilde aus Fasern, das allein durch die Faserhaftung zwischen den einzelnen Faserfloren oder Faserfilamenten zusammenhält, da eine elektrisch hinreichende Kontaktierung an den Haftungspunkten ("Netzknoten") einhergeht.

Durch die Verwendung von - im Vergleich zu elektrischen Drähten oder Leiterbahnen - im Querschnitt um mindestens eine, meist mehrere Größenordnungen kleineren Fasern wird zudem ein mechanisch stabileres und prozesssicheres Einbetten der flächigen Heizschicht in den strukturellen Sandwichverbund selbst erst ermöglicht. Die Heizschicht bzw. das Heizelement kann damit integraler Bestandteil des Sandwichverbunds werden und ist somit kein separates Anbau- oder Einbauteil.

Somit wird nebst einer erhöhten Ausfallsicherheit auch eine mechanische Verbesserung der Sandwichbauweise ermöglicht, da die Störung im Übergang zwischen Heizfolie und den Strukturschichten vermieden oder zumindest erheblich vermindert wird. Zudem erlaubt die erfindungsgemäße Lösung eine in der Geometrie deutlich flexiblere Gestaltung im Vergleich zu bekannten elektrischen Heizfolien mit vordefinierter Geometrie.

Die elektrisch leitfähigen Fasern des Fasernetzes unterscheiden sich insbesondere durch ihren geringen Durchmesser von ausgeprägten Einzelleitern in bekannten Heizfolien. Hierdurch wird ohne Erhöhung des erforderlichen Bauraums eine erhebliche Steigerung der Anzahl wirksamer elektrischer Leiter in dem vernetzten Fasernetz ermöglicht. Bevorzugt werden Fasern mit einem Durchmesser unter 500 µm, besonders bevorzugt unter 100 µm verwendet.

In besonders bevorzugter Ausführungsform werden Kohlenstoff-Fasern eingesetzt, die typischerweise einen Faserdurchmesser im Bereich von ca. 2,5 bis 15 µm, ggf. auch < 2,5 µm aufweisen. Zur Durchmesserbestimmung ist z.B. das Messverfahren gemäß ISO 11567:1995, Method C geeignet.

Als Fasern im leitfähigen Fasernetz kommen bevorzugt sog. Langfasern mit einer Länge >1mm in Betracht, hier insbesondere Fasern mit einer Faserlänge im Bereich von 1mm bis 20mm, wobei die Fasern besonders bevorzugt Kohlenstoff-Fasern sind. Durch die Verwendung der Langfasern lässt sich insgesamt eine robuste und störungsfreie Heizfolie mit geeigneter Leitfähigkeit realisieren, die gegenüber lokalen Durchbrechungen z.B. Bohrungen für am Paneel angebrachte Bauteile tolerant ist. Kurzfasern bieten nicht diese Vorteile und Endlosfasern erschweren u.a. die Fertigung.

Ein Heizelement mit einem Vlies aus einem kohlenstoffhaltigen Material zur Umwandlung elektrischer Energie in Wärme ist z.B. in der DE 10 2012 107579 A1 vorgeschlagen worden, z.B. zur Verwendung als Flächenheizung zwischen zwei Aluminiumplatten. Besonders geeignet für die vorliegende Erfindung erscheint die in der Patentanmeldung WO 2009/018960 A1 beschriebene elektrisch leitende Folie. Auch andere elektrisch leitfähige Fasern kommen in Betracht, beispielsweise kohlenstoffmodifizierte Polymerfasern, wie beispielsweise mit Kohlenstoff-Nanoröhren (CNT) oder Carbon Black (CB) modifizierte Polymerfasern. Ein Heizelement mit Kohlenstoff-Nanoröhren (CNT) wurde z.B. in der WO 2009/137725 A1 vorgeschlagen.

Erfindungsgemäß wird ein flächenartiges Fasernetz verwendet, das als Teil einer Verbundfolie hergestellt ist, bei welcher die elektrisch leitfähigen Fasern in eine Polymer-Matrix eingebettet werden können. Erfindungsgemäß wird ein Thermoplast als Polymer-Matrix eingesetzt, z.B. ein thermoplastisches Polyester. Die Matrix gewährleistet hierbei u.a. eine wirksame Unterdrückung von Störgeräuschen, die bei herkömmlichen Heizfolien durch Schwingung der Leiter bei angelegter Wechselspannung, z.B. bei elektromotorischen Schienenfahrzeugen, nicht selten auftritt. Ferner wird im Vergleich zu bekannten Systemen eine gleichmäßigere Temperaturverteilung über die Fläche des Sandwichpaneels erzielt. Zudem kann eine Heizschicht in Verbundbauweise, einfacher in die Verbundbauweise des Sandwichpaneels eingebunden werden. Die verwendete Heizschicht kann dabei vor Einbau in den Sandwich durchaus als folienartige oder blattartige flexible Lage vorliegen. Auch ein starrer, z.B. bereits vor- oder angehärteter faserverstärkter Verbund ist denkbar (ähnlich z.B. einem Prepreg).

In einer bevorzugten Ausführungsform werden Kohlenstoff-Fasern (Karbonfasern) eingesetzt. Mithin wird als Heizelement bevorzugt ein Kohlenstoff-Faser-Composite-Film (CFC-Film) verwendet.

Als Heizschicht wird besonders bevorzugt eine Faserverbund-Folie eingesetzt mit elektrisch leitfähigen Fasern, insbesondere reinen Kohlenstoff-Fasern, in einem Matrixpolymer aus einem thermoplastischen Polyester, in welchem die Fasern eingebettet sind. Die Eigenschaften von carbonfaserverstärktem Kunststoff (CFK) sind im Composite-Leichtbau an sich bereits erprobt und bewährt.

Auch durch geeignete Beschichtungstechnik mit Metall beschichtete Polymerfasern kommen als elektrisch leitfähige Fasern in Betracht.

In einer bevorzugten Weiterbildung wird jedoch als Heizschicht eine Faserverbund-Folie aus einem Matrix-Polymer mit einem Fasernetz Kohlenstoff-Fasern (aus reinem Kohlenstoff), welche in das Matrix-Polymer eingebettet sind, verwendet.

Im Vergleich zu herkömmlichen Struktur-Leichtbaupaneelen für Schienenfahrzeuge, bei denen typischerweise dünne Aluminiumplatten als Deckschicht eingesetzt werden, wird in bevorzugter Weiterbildung mindestens eine Deckschicht, vorzugsweise beide Deckschichten, aus einem Faserverbundkunststoff (FVK) hergestellt.

Zur Verwendung als Deckschicht kommt insbesondere ein Glasfaser-Phenolharz-Verbund in Betracht.

Besonders bevorzugt umfasst die Deckschicht - wegen brandschutztechnischer Eigenschaften - zumindest eine äußere Lage mit in Phenolharz-Matrix eingebetteten Fasern, insbesondere Glasfasern . Die Deckschicht kann auch im Wesentlichen aus in Phenolharz-Matrix eingebetteten Glasfasern bestehen, was zudem eine rechte kostengünstige Herstellung erlaubt.

Eine gute Integration der Heizschicht in den strukturellen Aufbau wird erzielt, indem die (selbst vorzugsweise als FVK-Bauteil realisierte) Heizschicht mit der oberen Deckschicht und dem Sandwichkern beidseitig großflächig stoffschlüssig verbunden ist. Dies kann insbesondere ohne zusätzlichen Aufwand durch eine Klebeverbindung erreicht werden, vorzugsweise durch einen thermoplastischen Kleber, beispielsweise mittels thermoplastischem Klebefilms. Hierbei kann eine Klebeverbindung ausgenutzt werden, die während der Herstellung des Sandwichverbunds meist ohnehin realisiert wird.

Für gute thermische Isolierung und zugleich hohe Stabilität ist es vorteilhaft wenn der Sandwichkern, z.B. ein Schaumkern, über mindestens die wirksame Grundfläche der Heizschicht ununterbrochen einheitlich ausgeführt ist, d.h. der Kern in Draufsicht mindestens den gesamten Wirkbereich der Heizschicht bzw. Heizfolie (Kontaktierungbereiche ausgenommen) überdeckt. Dabei kann der Sandwichkern, in Draufsicht betrachtet, insbesondere über einen überwiegenden Anteil der gesamten Paneel-Grundfläche unterbrechungsfrei ausgeführt sein oder aus mehreren nebeneinander angeordneten Kernelementen, z.B. bei großflächigen Paneelen. Idealerweise wird ein einteiliges homogenes und ggf. isotropes Kernmaterial verwendet.

Zur Optimierung der Klebeverbindung zwischen den eigentlichen Strukturschichten, d.h. der oberen Deckschicht und dem Sandwichkern, weist die als Heizschicht verwendete folienartige Lage vorzugsweise eine regelmässige Anordnung von Durchbrüchen, z.B. eine Perforation auf. Vorzugsweise beträgt der Flächenanteil der Perforation in der Heizschicht einen Anteil im Bereich von 5-25% bezogen auf das Flächenmaß des elektrisch wirksamen Fasernetzes. Der Durchmesser der einzelnen Öffnungen in der Perforation soll eine mechanisch wirksame Klebeverbindung unmittelbar zwischen Deckschicht und Sandwichkern gewährleisten. Aufgrund der die Perforation durchdringenden Klebeverbindung kann die Lastübertragung überwiegend unmittelbar zwischen Deckschicht und Sandwichkern erfolgen, d.h. eine übermäßige Beanspruchung der Heizschicht wird vermieden. Die Perforation ist zweckmäßig gleichmäßig in beide Achsrichtungen über die Fläche verteilt.

Als Sandwichkern wird bevorzugt ein offenporiger oder geschlossenporiger Schaumkern aus elektrisch und thermisch isolierendem Material, insbesondere aus thermoplastischen Kunststoff, vorzugsweise PET, eingesetzt.

In besonders einfacher Bauweise besteht der Schichtaufbau des Sandwichpaneels aus den drei vorgenannten eigentlichen Strukturschichten: obere Deckschicht, Sandwichkern und untere Deckschicht sowie aus der Funktionsschicht mit elektrischer Widerstandsreizung aus einem Fasernetz. Dementsprechend besteht der Aufbau bevorzugt aus der oberen Deckschicht aus einem FVK, insbesondere aus einem Glasfaser-Phenolharz-Verbund, der Heizschicht mit einem als elektrischem Heizwiderstand wirkenden flächigen Fasernetz, dem Sandwichkern aus einem Schaumstoff, insbesondere aus PET-Schaumstoff, und schließlich der unteren Deckschicht.

Ungeachtet möglicher weiterer Bestandteile ist die obere Deckschicht vorzugsweise stoffschlüssig mit der Oberseite des Sandwichkerns verbunden, wobei die dazwischen liegende Heizschicht ebenfalls mit in diese Verbindung eingebunden ist. Bevorzugt wird hierzu ein thermoplastischer Klebefilm in einer oder mehreren Klebelagen eingesetzt, ggf. beidseitig der Heizschicht. Analog sind auch die untere Deckschicht und eine Unterseite des Sandwichkerns vorzugsweise stoffschlüssig verbunden, insbesondere anhand ausgehärteter Klebelagen, insbesondere aus thermoplastischem Klebefilm.

Um eine zuverlässige und robuste elektrische Kontaktierung zu gewährleisten, wird vorzugsweise vorgesehen, dass die Heizschicht an zwei gegenüberliegenden Schmalseiten eine über den überwiegenden Anteil der jeweiligen Länge der Schmalseite erstreckte Leiterbahn aufweist, mit welcher das Fasernetz elektrisch verbunden ist, insbesondere über die Länge der Leiterbahn elektrisch verbunden ist. Diese elektrisch leitende Verbindung kann im Wesentlichen durchgehend realisiert werden. Die Kontaktierung kann beispielsweise durch ein Beschichtungsverfahren bzw. textiltechnisches Einbringen von Leiterbahnen bzw. Leiterdrähten erfolgen. Alternativ zu einer über die Länge durchgehenden Kontaktierung ist es denkbar, an einer Vielzahl einzelner Kontaktpunkte in regelmäßigen Abständen das Fasernetz mit der als eine Art Verteilerschiene dienenden Leiterbahn zu verbinden. Über die beiden Leiterbahnen können weitere getrennte Fasernetze bzw. Heizschichten in Serie oder parallel angeschlossen werden. Dementsprechend weist jede Leiterbahn bevorzugt mindestens einen, vorzugsweise zwei Anschlüsse bzw. Verbindungsleiter auf.

Zur Vermeidung von Kontatkierungsbereichen im mittleren Bereich des Sandwichpaneels bzw. zur größeren Freiheit bei der anschließenden Nachbearbeitung ist es vorteilhaft wenn die Längserstreckung der Heizschicht, d.h. die Abmessung ihrer Längsseiten, einen überwiegenden Anteil, vorzugsweise mindestens 80% der entsprechenden Paneelabmessung beträgt, insbesondere der Paneelabmessung zwischen den gegenüberliegenden Paneelkanten, an welchen die Leiterbahnen der Heizschicht vorzugsweise angeordnet sind.

In bevorzugter Weiterbildung, insbesondere zur Vereinfachung der elektrischen Anschlusstechnik, haben mindestens zwei Schmalseiten bzw. Kanten des Sandwichpaneels einen Randverschluss umfassend eine Leitungsdurchführung, vorzugsweise ein Hohlprofil, z.B. ein extrudiertes Aluminium-Profil mit mindestens einem umschlossenen Hohlraum. Im Hohlraum des Hohlprofils können die Anschlussleitungen für die Heizschicht, insbesondere für die mit dem Fasernetz verbundenen Leiterbahnen sicher verlegt werden. Alle Schmalseiten sollten einen elektrisch isolierenden Randverschluss zu Vermeidung ungewollter Kontaktierung mit der Heizschicht aufweisen.

Für Steuerungs-, Regelungs- und/oder Sicherheitszwecke kann mindestens ein Temperaturfühler der Heizschicht wirksam zugeordnet, d.h. an der entsprechenden Deckschicht angeordnet werden. Ein Temperaturfühler kann hierzu z.B. mit der Heizschicht zwischen der oberen Deckschicht und dem Sandwichkern eingebettet werden. Geeignete flächige Temperaturfühler, z.B. in Folienbauweise, sind verfügbar und können ggf. auch in die flächige Verbund-Folie des Heizelements mit integriert sein.

Wenngleich die erfindungsgemäße Bauweise eine vollflächig durchgehende Heizwirkung über im Wesentlichen das gesamte Sandwichpaneel ermöglicht, kann es je nach Anwendung bzw. sonstigen Erfordernissen wünschenswert sein, nur einen Teilbereich oder mehrere getrennte Flächenbereiche des Sandwichpaneels mit jeweils einem unabhängig als Heizwiderstand wirkenden, flächigen Fasernetz auszurüsten.

Die erfindungsgemäße Bauweise des Sandwichpaneels mit Heizfunktion ermöglicht eine besonders geringe Gesamtbauhöhe des strukturellen Schichtaufbaus (exkl. oberseitig angebrachte Nutzschichten, wie beispielsweise Teppichböden oder dgl.). Hierbei haben beide Deckschichten insbesondere eine geringere Bauhöhe als der Sandwichkern in Leichtbauweise und die Heizschicht selbst wiederum eine spürbar geringere Bauhöhe als die obere Deckschicht.

Eine robuste Bauweise, insbesondere auch ohne Verwendung von Metallplatten im Schichtaufbau, mit integrierter Heizschicht lässt sich erzielen, wenn Deckschichten aus FVK jeweils eine Bauhöhe bzw. Stärke von mindestens 1.5mm, vorzugsweise mindestens 2.0mm, aufweisen und die Heizschicht eine Bauhöhe bzw. Schichtdicke von maximal 20% der zugeordneten, z.B. oberen Deckschicht aufweist.

Das erfindungsgemäß vorgeschlagene Sandwichpaneel eignet sich insbesondere zur Verwendung als Bodenplatte in einem Schienenfahrzeug, insbesondere für Personenverkehr, d.h. als tragfähiges Strukturbauteil. Beansprucht wird ebenfalls eine mit dem vorgeschlagenen Sandwichpaneel ausgerüstete Bodenplatte.

### KURZBESCHREIBUNG DER ZEICHNUNGEN

Weitere Einzelheiten, Merkmale und Vorteile der Erfindung sind - ohne Beschränkung der Allgemeinheit der o.g. Merkmale - der nachfolgenden, ausführlicheren Beschreibung bevorzugter Ausführungsbeispiele anhand der beiliegenden Zeichnungen zu entnehmen. Diese zeigen in schematischer und z.T. in maßstabsgetreuer Darstellung:
- FIG.1:: ein Prinzipschema eines erfindungsgemäßen Sandwichpaneels mit Heizfunktion, als vertikaler Teilschnitt dargestellt;
- FIG.2A-2C:: einen vertikalen Querschnitt durch die Breite eines erfindungsgemäßen Sandwichpaneels (FIG.2C), hier als maßstabgetreue Fertigungszeichnung, mit einer vergrößerten Ansicht eines längsseitigen Randprofils (FIG.2A) und eines breitseitigen Trägerprofils (FIG. 2B);
- FIG.3:: eine Draufsicht auf ein vollflächig beheiztes Sandwichpaneel gemäß einem ersten Ausführungsbeispiel;
- FIG.4:: eine Draufsicht auf ein in einer Teilfläche beheiztes Sandwichpaneel gemäß einem zweiten Ausführungsbeispiel;
- FIG.5: eine Draufsicht auf ein erfindungsgemäßes Heizelement mit seitlichen Leiterbahnen zum elektrischen Anschluss an die Versorgung; und
- FIG.6:: eine rein beispielhafte Rasterelektronenmikroskop-Aufnahme eines elektrogesponnenen und karbonisierten Kohlenstoffnanofaservlieses (Basis: PAN) mit Faserdurchmesser < 1 µm (© Foto Fraunhofer-Gesellschaft zur Förderung der angewandten Forschung e.V. - Institut für Werkstoff- und Strahltechnik IWS Dresden).

### BESCHREIBUNG BEVORZUGTER AUSFÜHRUNGSFORM(EN) ANHAND DER ZEICHNUNGEN

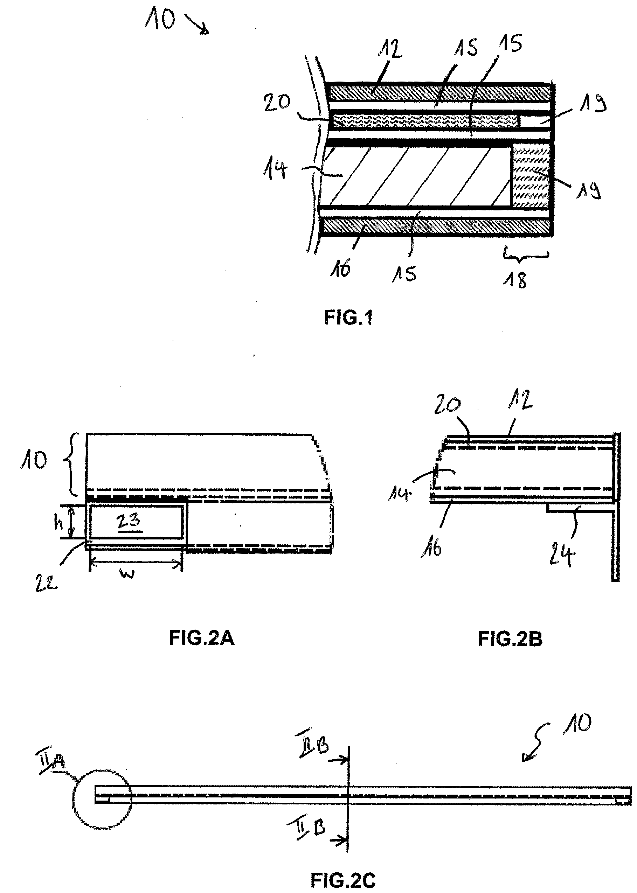

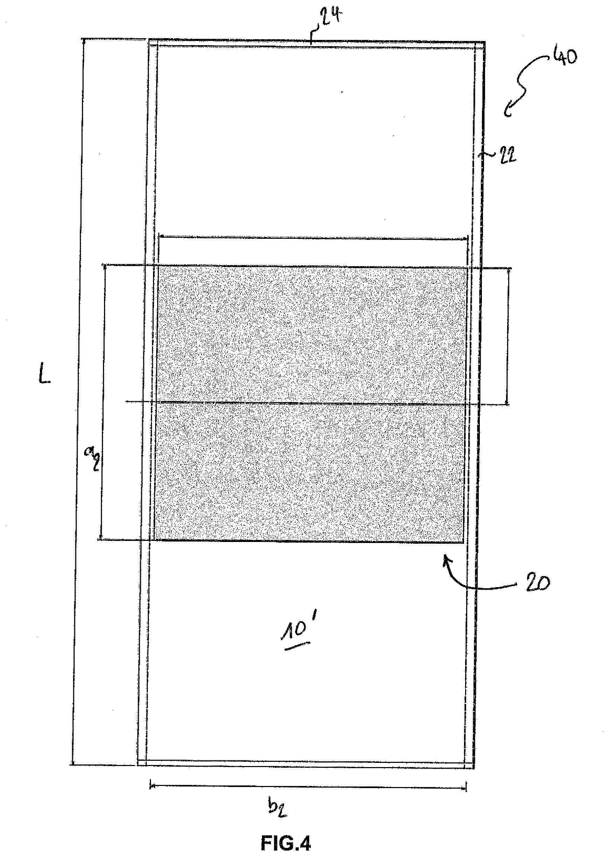

FIG.1 zeigt rein schematisch den prinzipiellen Aufbau eines Sandwichpaneels 10 nach einem bevorzugten Ausführungsbeispiel. Das Sandwichpaneel 10 ist hier als rein nicht-metallisches Sandwichpaneel (insbesondere ohne Deckplatten aus Aluminium) ausgeführt. Es ist als Bestandteilen der Tragstruktur, nämlich einer Bodenplatte (FIG.3/FIG.4) für einen Schienenwagen bestimmt. Ein optionaler Bodenbelag und sonstige nachträgliche Anbauten und Ausrüstungen, wie z.B. strukturelle Anbindungspunkte, z.B. für Sitze/Haltestangen usw., sind nicht gezeigt. FIG.1 zeigt zur Erleichterung nur einen Randbereich des Sandwichpaneels 10, der gegenüberliegende ist symmetrisch aufgebaut.

Gemäß FIG.1 hat das Sandwichpaneel 10 einen über seine Länge und Breite identisch durchgehenden Schichtaufbau in Sandwichbauweise mit einer oberen Deckschicht 12 aus einem Phenolharz-Glasfaser Laminat, einem Schaumkern 14, z.B. aus geschlossenporigem PET und einer unteren Deckschicht 16, ebenfalls ein Phenolharz-Glasfaser-Laminat an sich bekannter Art. Erfindungsgemäß ist zwischen der oberen Deckschicht 12 und dem Schaumkern 14 eine elektrische Heizschicht 20 vorgesehen. Dabei ist die Heizschicht 20 über einen Klebefilm 15 mit der oberen Deckschicht 12 und über einen gegebenenfalls weiteren Klebefilm 15 mit der Oberseite des Schaumkerns 14 stoffschlüssig verbunden. Die Unterseite des Schaumkerns 14 ist ebenfalls über einen Klebefilm stoffschlüssig mit der unteren Deckschicht 16 befestigt. Dementsprechend ist die Heizschicht 20 integraler Bestandteil des Sandwich-Verbunds aus den Deckschichten 12, 16 und dem Sandwichkern 14. Die Heizschicht 20 kann ohne nennenswerten Mehraufwand in den ansonsten bekannten Herstellungsprozess des Sandwichpaneels 10 als zusätzliche Lage bzw. Schicht mit integriert werden, d.h. wird Teil des oberseitigen Laminats auf dem Schaumkern 14. Als Klebefilme 15 können thermoplastische Klebefilm eingesetzt werden, die durch einen geeigneten Prozess ausgehärtet wurden. Die Deckschichten 12, 16 aus Phenol-Glas-Laminat erfüllen alle gängigen Brandnormen im Schienenfahrzeugbereich.

An den vier Schmalseiten des Sandwichpaneels 10 sind jeweils Randverschlüsse 18 vorgesehen, die zum Abdichten und zum elektrischen Isolieren in Bezug auf die Heizschicht 20 dienen. Dabei können der Sandwichkern 14 und die Heizschicht 20 jeweils durch ein spezielles Dichtmaterial 19 umrandet sein, das in den Sandwich- Verbunds aus den Deckschichten 12, 16 und dem Sandwichkern 14 mit integriert ist. Die Deckschichten 12, 16 aus Phenolharz-Glasfaser-Laminat bieten ebenfalls eine sehr gute elektrische Isolierwirkung, auch bei höheren Betriebsspannungen der Heizschicht 20, typisch zwischen 100V und 1kV Wechsel- oder Gleichspannung..

Zur thermischen Wärmedämmung gegenüber der von der Nutzseite abgewandten Kaltbereich dient insbesondere der PET-Schaumkern 14, nebst seiner mechanischen Funktion im Sandwichpaneel 14. Aus diesem Grund wird ein Schaumkern 14 gegenüber ebenfalls denkbaren nichtmetallischen Wabenkernen bevorzugt. Auch die Randverschlüsse 18 können nebst Abdichtungswirkung und elektrischer Isolierung auch eine thermische Dämmung erzielen und Dämmmaterial einsparen.

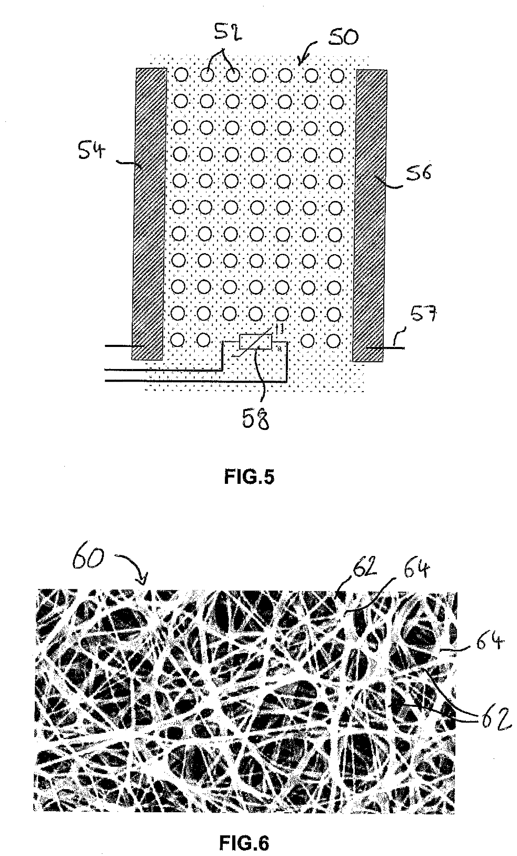

Es wird demnach als Bestandteil der Tragstruktur, insbesondere als Bodenplatte 30; 40 (FIG.3-4), ein vollkommen nichtmetallisches (ausgenommen die Leiterbahnen zu Kontaktierung der Heizschicht 20 -vgl. FIG.5) Sandwichpaneel 10 bevorzugt. Zur Befestigung an der restlichen Struktur umfasst die Bodenplatte 30; 40, wie in FIG.2A-2C veranschaulicht, seitliche Metallprofile. FIG.2A zeigt an der Längsseite ein Hohlprofil 22, z.B. ein extrudiertes Vierkantprofil aus Aluminium, das durch Klebung stoffschlüssig mit dem Sandwichpaneel 10 verbunden ist. Beispielhaft hat das Hohlprofil Abmessungen von ca. h=8-12mm und w=24-36mm. Die Stärke des Sandwichpaneels liegt, je nach freitragender Gesamtabmessung und Anforderungen, im Bereich von ca. 10-40mm. FIG.2B zeigt ein weiteres T-förmiges Trägerprofil 24 aus Metall, insbesondere Aluminium, das an der Breitseite mit dem Sandwichpaneel 10 verklebt ist.

FIG.3-4 zeigen beispielhaft Bodenplatten 30; 40 in zwei Ausführungsvarianten, vollflächig beheizt (FIG.3) und teilbeheizt (FIG.4). In FIG.3 ist die Abmessung der Heizschicht 20 nur unwesentlich kleiner als die Abmessung der Bodenplatte 30 insgesamt, z.B. L x B = ca. 2,8m x 1,2m, wobei die Bodenplatte 30 einen selbsttragenden Boden, z.B. auf der Wagenkasten-Struktur im Zwischenboden eines doppelstöckigen Passagierzuges darstellt. Zwischen den Tragprofilen 22, 24 und der Heizschicht 20 ist aus Sicherheitsgründen vollumfänglich eine weitere elektrische Isolierung mit einer Wandstärke d von ca. 10-20mm vorgesehen. FIG.4 zeigt eine Bodenplatte 40 mit weitgehend baugleichem Sandwichpaneel 10', wobei die Heizschicht 20 jedoch nur einen mittleren Teilbereich der Gesamtlänge abdeckt, mit etwa a2xb2 = 1, 0x1, 1m.

Die Heizschicht 20 besteht in der bevorzugten Ausführungsform aus einem in FIG.5 schematisch veranschaulichten Carbonfaser-Composite-Film 50 (CCF), der gegebenenfalls mit einer Perforation aus einem regelmäßigen Muster mit Durchlochungen 52 perforiert sein kann. Der CCF 50 umfasst ein als elektrischer Heizwiderstand wirkendes, flächiges Fasernetz 60 aus elektrisch leitfähigen Kohlestoff-Fasern 62, z.B. eine vliesartige Struktur, wie nur zur Veranschaulichung (ohne Beschränkung) beispielhaft in FIG.6 gezeigt. Es kommen natürlich, je nach gewünschter Heizleistung, auch Kohlenstoff-Fasern 62 mit größerem Durchmesser, typisch mit bis zu 15 µm Durchmesser in Betracht.

FIG.6 zeigt - nur zur Veranschaulichung des Prinzips - auch die Vernetzung der praktisch unzählbaren Anzahl Fasern 62 im CCF über eine ebenfalls praktisch unzählbare Anzahl "Netzknoten" 64, die eine elektrisch leitende Verbindung bilden, sodass im Wesentlichen ein gegen lokale Unterbrechungen robustes Netzwerk entsteht. Dies ermöglicht eine sehr hohe Beschädigungstoleranz. Da der CCF 50 soz. im Ganzen als elektrischer Widerstand fungiert, ist ein Ausfall bei Beschädigung nahezu ausgeschlossen. Hierdurch wird auch das nachträgliche Einbringen von Aussparungen, z.B. für Befestigungspunkte oder dgl., unkritisch. Zudem erlaub ein folienartiger Faserverbund, wie z.B. der CCF 50 auch eine überwiegend freie Konfektionierung des Heizelements vor dem Einbringen in den Schichtaufbau des Sandwichpaneels 10. Als CCF 50 kann insbesondere die elektrisch leitende Folie, aus einer thermoplastischen Matrix und leitfähigen Verstärkungsfasern gemäß der Lehre aus WO 2009/018960 A1 eingesetzt werden.

Eine ähnliche Wirkung lässt sich, anstelle einer nicht gewebten Faser-Textilie, auch mit gewebten Faserstrukturen, z.B. mit einem Fasergeflecht aus Carbonfasern erzielen. Zudem sind auch andere leitfähige Fasern denkbar. Der elektrische Widerstand und damit die Heizleistung bei gegebener Spannung wird im Wesentlichen durch den Anteil der elektrisch leitfähigen Fasern 62 pro Fläche definiert und ist somit über weite Bereiche durch geeignete Auswahl bzw. Herstellung der flächigen Fasertextilie einstellbar.

Ein flächiges Fasernetz 60 aus elektrisch leitfähigen, insbesondere nichtmetallischen Fasern 62 zeigt ferner eine nur geringe thermische Ausdehnung des Gesamtsystems im Heizbetrieb. Damit ist auch, anders als bei Metallverbundsystemen mit typischen Heizfilmen, hier keine thermische Entkopplung zur umgebenden Konstruktion notwendig.

Der CCF 50 ist entlang seinen gegenüberliegenden Längsseiten mit je einer längserstreckten Leiterbahn 54, 56 versehen, welche das Fasernetz 60 elektrisch kontaktiert. Für eine möglichst flächige Stromverteilung sollten die Leiterbahnen 54, 56 über den überwiegenden Anteil der jeweiligen Länge der Schmalseite verbunden sein. Die Leiterbahnen 54, 56 können z.B. aufgedruckte oder durch Beschichtung auf das Faservlies 60 aufgebrachte Kupfer-Leiterbahnen geringer Stärke sein und sind z.B. mit je einer Anschlussleitung 57 versehen. Auch sonstige Leitungen können z.B. durch den Hohlraum 23 in den längsseitigen Hohlprofilen 22 (FIG.2A) verlegt werden.

Eine Anzahl Sandwichpaneele 10 mit Heizfunktion kann je nach Einsatzbereich als einzige Bordheizung des Fahrzeugs, oder unterstützend - neben einer bestehenden Konvektionsheizung - eingesetzt werden.

### BEZUGSZEICHENLISTE

### FIG.1-2

- 10; 10': Sandwichpaneel
- 12: obere Deckschicht
- 14: Sandwichkern / Schaumkern
- 15: Klebelage
- 16: untere Deckschicht
- 18: Randverschluss
- 19: Dichtmaterial
- 20: Heizschicht
- 22, 24: Tragprofile
- 23: Hohlraum

### FIG.3-4

- 10; 10': Sandwichpaneel
- 20: Heizschicht
- 22, 24: Tragprofile
- 30, 40: Bodenplatte
- L: Länge (Bodenplatte)
- a1, a2: Länge (Heizschicht)
- b1, b2: Breite (Heizschicht)
- d: Abmessung Isolierstreifen

### FIG.5

- 50: CCF
- 52: Durchlochung
- 54, 56: Leiterbahn
- 57: Anschlussleitung
- 58: Temperatursensor

### FIG. 6

- 60: Fasernetz (Vlies)
- 62: Carbonfasern
- 64: Verbindungsstellen ("Netzknoten")

## Patentansprüche

1. Sandwichpaneel (10) mit Heizfunktion für ein Fahrzeug, insbesondere für ein Schienenfahrzeug, umfassend einen Schichtaufbau in Sandwichbauweise mit
einer oberen Deckschicht (12) und einer unteren Deckschicht (16), sowie mit mindestens einer elektrischen Heizschicht (20) und einem Sandwichkern (14), wobei die Heizschicht (20) und der Sandwichkern (14) zwischen den beiden Deckschichten (12, 16) angeordnet sind,
**dadurch gekennzeichnet, dass**
die Heizschicht (20) ein flächiges Fasernetz (60) aus elektrisch leitfähigen Fasern (62) umfasst, wobei die Heizschicht (20) eine Verbund-Folie (50) mit einer Polymer-Matrix aus einem Thermoplast umfasst, in welche die elektrisch leitfähigen Fasern des Fasernetzes eingebettet sind.

2. Sandwichpaneel nach Anspruch 1, **dadurch gekennzeichnet, dass** die Heizschicht eine Faserverbund-Folie (50) mit einem Fasernetz (60) aus in das Matrixpolymer eingebetteten Kohlenstoff-Fasern ist, wobei die elektrisch leitfähigen Fasern bevorzugt in ein Matrixpolymer aus einem thermoplastischen Polyester eingebettet sind.

3. Sandwichpaneel nach einem der Ansprüche 1 oder 2, **dadurch gekennzeichnet, dass** mindestens eine Deckschicht (12; 16), vorzugsweise beide Deckschichten, aus einem Faserverbundkunststoff (FVK) bestehen, insbesondere aus einem Glasfaser-Phenolharz-Verbund.

4. Sandwichpaneel nach einem der Ansprüche 1 bis 3, **dadurch gekennzeichnet, dass** die Heizschicht (20) mit der oberen Deckschicht (12) und dem Sandwichkern (14) stoffschlüssig verbunden, insbesondere verklebt, ist, vorzugsweise durch eine thermoplastische Klebelage (15).

5. Sandwichpaneel nach Anspruch 4, **dadurch gekennzeichnet, dass** der Sandwichkern (14) über mindestens die wirksame Grundfläche der Heizschicht (20) ununterbrochen einheitlich ausgeführt ist, insbesondere über einen überwiegenden Anteil der Paneelgrundfläche ununterbrochen; und/oder die Heizschicht eine regelmäßige Anordnung von Durchbrüchen (52) zur Verbesserung der Klebeverbindung zwischen der oberen Deckschicht (12) und dem Sandwichkern (14) aufweist, insbesondere eine Perforation mit einem Flächenanteil im Bereich von 5% bis 25% des Flächenmaß des Fasernetzes.

6. Sandwichpaneel nach einem der Ansprüche 1 bis 5, **dadurch gekennzeichnet, dass** der Sandwichkern (14) als offenporiger oder geschlossenporiger Schaumkern aus einem elektrisch isolierenden und wärmdämmendem Material, insbesondere aus einem thermoplastischen Kunststoff, vorzugsweise aus PET, ausgeführt ist.

7. Sandwichpaneel nach einem der Ansprüche 1 bis 6, **dadurch gekennzeichnet, dass** der Schichtaufbau aus:
- der oberen Deckschicht (12) aus einem FVK, insbesondere aus einem Glasfaser-Phenolharz-Verbund;
- der Heizschicht (20);
- dem Sandwichkern (14) aus einem Schaumstoff, insbesondere aus einem PET-Schaumstoff; und
- der unteren Deckschicht (16); besteht,
wobei die obere Deckschicht (12) und eine Oberseite des Sandwichkerns (14) mit der zwischenliegenden Heizschicht (20) durch eine oder mehrere ausgehärtete Klebelagen (15), insbesondere aus thermoplastischem Klebefilm, stoffschlüssig verbunden sind und die untere Deckschicht (16) und eine Unterseite des Sandwichkerns (14) durch eine ausgehärtete Klebelage, insbesondere aus thermoplastischem Klebefilm, stoffschlüssig verbunden sind.

8. Sandwichpaneel nach einem der Ansprüche 1 bis 7, **dadurch gekennzeichnet, dass** die Heizschicht (20) an zwei gegenüberliegenden Schmalseiten eine über den überwiegenden Anteil der jeweiligen Länge der Schmalseite erstreckte Leiterbahn (54, 56) aufweist, mit welcher das Fasernetz (60) elektrisch verbunden ist, und dass die Heizschicht (20) eine Längserstreckung ihrer Längseiten aufweist welche mindestens 80% der entsprechenden Paneelabmessung beträgt.

9. Sandwichpaneel nach einem der Ansprüche 1 bis 8, insbesondere nach Anspruch 7 oder 8, **dadurch gekennzeichnet, dass** alle Schmalseiten des Sandwichpaneels (10) einen elektrisch isolierenden Randverschluss (18) umfassen, wobei mindestens zwei Schmalseiten eine Leitungsdurchführung aufweisen, vorzugsweise insbesondere ein Hohlprofil (22).

10. Sandwichpaneel nach einem der Ansprüche 1 bis 9, insbesondere nach Anspruch 7, **dadurch gekennzeichnet, dass** mindestens ein der Heizschicht (20) zugeordneter Temperaturfühler (58) an einer der beiden Deckschichten (12, 16) vorgesehen ist, insbesondere zwischen der oberen Deckschicht (12) und dem Sandwichkern eingebettet ist.

11. Sandwichpaneel nach einem der Ansprüche 1 bis 10, insbesondere nach Anspruch 7, **dadurch gekennzeichnet, dass** Heizschicht (20) einen oder mehrere Flächenbereiche mit jeweils einem als Heizwiderstand wirkenden, flächigen Fasernetz aufweist, wobei das Fasernetz (60) als Vlies, Gelege, Geflecht, Gewirk oder Gestrick, besonders bevorzugt als Faservlies ausgeführt ist.

12. Sandwichpaneel nach einem der vorstehenden Ansprüche, insbesondere nach Anspruch 11, **dadurch gekennzeichnet, dass** die elektrisch leitfähigen Fasern des Fasernetzes (60):
- eine Faserlänge im Bereich von 1mm bis 20mm aufweisen, wobei die Fasern besonders bevorzugt Kohlenstoff-Fasern (62) sind; und/oder
- einen Durchmesser < 100 µm aufweisen, wobei die Fasern besonders bevorzugt Kohlenstoff-Fasern (62) sind und einen Durchmesser im Bereich von 2,5 bis 15 µm aufweisen.

13. Sandwichpaneel nach einem der vorstehenden Ansprüche, **dadurch gekennzeichnet, dass** beide Deckschichten (12, 16) jeweils eine geringere Bauhöhe aufweisen als der Sandwichkern (14) und/oder die Heizschicht (20) eine geringere Bauhöhe als die obere Deckschicht (12) aufweist, wobei insbesondere die Deckschichten (12, 16) eine Bauhöhe von mindestens 1.5mm, vorzugsweise mindestens 2mm, aufweisen und die Heizschicht eine Bauhöhe von maximal 20% der zugeordneten Deckschicht (12, 16) aufweist.

14. Bodenplatte (30; 40) zur Verwendung als tragfähiges Strukturbauteil in einem Schienenfahrzeug, insbesondere für den Personenverkehr, umfassend ein Sandwichpaneel (10) nach einem der vorstehenden Ansprüche 1 bis 13.

15. Verwendung eines Sandwichpaneels (10) nach einem der vorstehenden Ansprüche 1 bis 13 als Strukturbauteil in einem Fahrzeug, insbesondere in einer Bodenplatte eines Schienenfahrzeugs.

## Claims

1. Sandwich panel (10) with heating function for a vehicle, in particular for a rail vehicle, comprising a layer structure of sandwich design with an upper cover layer (12) and a lower cover layer (16) as well as at least one electrical heating layer (20) and a sandwich core (14), said heating layer (20) and sandwich core (14) being arranged between said two cover layers (12, 16)
**characterized in that**
the heating layer (20) comprises an areal fiber mesh (60) of electrically conductive fibers (62), wherein said heating layer (20) comprises a composite film (50) with a polymer matrix consisting of a thermoplast in which the electrically conductive fibers of the fiber mesh are embedded.

2. Sandwich panel according to claim 1, **characterized in that** the heating layer is a fiber composite film (50) having a fiber mesh (60) of carbon fibers embedded in the matrix polymer, wherein the electrically conductive fibers are preferably embedded in a matrix polymer from a thermoplastic polyester.

3. Sandwich panel according to any of claims 1 or 2, **characterized in that** at least one cover layer (12; 16), preferably both cover layers, consist of a fiber composite plastic (FRP), especially of a glass fiber phenolic resin composite.

4. Sandwich panel according to any of claims 1 to 3, **characterized in that** the heating layer (20) materially bonded to the upper cover layer (12) and the sandwich core (14), particularly by adhesive bonding, preferably by a thermoplastic adhesive layer (15).

5. Sandwich panel according to claim 4, **characterized in that** the sandwich core (14) is designed uniformly without interruption over at least the effective base area of the heating layer (20), especially without interruption over a predominant part of the panel base area; and/or
the sandwich layer has a regular arrangement of breakthroughs (52) for improving the adhesive bond between the upper cover layer (12) and the sandwich core (14), in particular a perforation with a surface area in the range of 5% to 25% of the surface measure of the fiber mesh.

6. Sandwich panel according to any of claims 1 to 5, **characterized in that** the sandwich core (14) is designed as an open-pore or closed-pore foam core made of an electrically insulating and heat-insulating material, in particular from a thermoplastic material, preferably PET.

7. Sandwich panel according to any of claims 1 to 6, **characterized in that** the layer structure consists of:
- the upper cover layer (12) made of an FCP, in particular of a glass fiber phenolic resin composite;
- the heating layer (20);
- the sandwich core (14) consisting of a foam, in particular of a PET foam; and
- the lower cover layer (16);
wherein the upper cover layer (12) and an upper side of the sandwich core (14) are materially bonded to the interposed heating layer (20) by one or more cured adhesive layers (15), in particular made of a thermoplastic adhesive film, and the lower cover layer (16) and an underside of the sandwich core (14) are materially bonded by a cured adhesive layer, in particular made of a thermoplastic adhesive film.

8. Sandwich panel according to any of claims 1 to 7, **characterized in that** the heating layer (20) has, on two opposite narrow sides, a conductor path (54, 56) which extends over the predominant part of the respective length of the narrow side and to which the fiber mesh (60) is electrically connected, and **in that** the heating layer (20) has a longitudinal extent of its longitudinal sides which is at least 80% of the corresponding panel dimension.

9. Sandwich panel according to any of claims 1 to 8, in particular according to claim 7 or 8, **characterized in that** all narrow sides of the sandwich panel (10) have an electrically insulating edge seal (18), at least two narrow sides having a cable duct, preferably and particularly a hollow profile (22).

10. Sandwich panel according to any of claims 1 to 9, in particular according to claim 7, **characterized in that** at least one temperature sensor (58) assigned to the heating layer (20) is provided on one of the two cover layers (12, 16), in particular embedded between the upper cover layer (12) and the sandwich core.

11. Sandwich panel according to any of claims 1 to 10, in particular according to claim 7, **characterized in that** the heating layer (20) has one or more surface areas, each with an areal fiber mesh acting as a heating resistor, said fiber mesh (60) being designed as a nonwoven, scrim, braid, warp knitted fabric or knitted fabric, particularly preferably as a nonwoven fabric.

12. Sandwich panel according to any of the preceding claims, in particular according to claim 11, **characterized in that** the electrically conductive fibers of the fiber mesh (60) have:
- a fiber length in the range of 1 mm to 20 mm, the fibers particularly preferably being carbon fibers (62); and/or
- a diameter of < 100 µm, the fibers particularly preferably being carbon fibers (62) and having a diameter in the range of 2.5 to 15 µm.

13. Sandwich panel according to any of the preceding claims, **characterized in that** both cover layers (12, 16) have a lower overall height than the sandwich core (14) and/or the heating layer (20) has a lower overall height than the upper cover layer (12), wherein in particular the cover layers (12, 16) have an overall height of at least 1.5 mm, preferably at least 2 mm, and the heating layer has an overall height of maximally 20% of the assigned cover layer (12, 16).

14. Base plate (30; 40) for use as a load-bearing structural component in a rail vehicle, in particular for passenger service, comprising a sandwich panel (10) according to any of the preceding claims 1 to 13.

15. Use of a sandwich panel (10) according to any of the preceding claims 1 to 13 as a structural component in a vehicle, in particular in a base plate of a rail vehicle.

## Revendications

1. Panneau en sandwich (10) ayant une fonction de chauffage pour un véhicule, en particulier pour un véhicule ferroviaire, comprenant une structure en couches de type sandwich avec
une couche de couverture supérieure (12) et une couche de couverture inférieure (16) ainsi qu'au moins une couche chauffante électrique (20) et un noyau sandwich (14), ladite couche chauffante (20) et le noyau sandwich (14) étant disposés entre les deux couches de couverture (12, 16),
**caractérisé en ce que**
la couche chauffante (20) comprend un réseau bidimensionnel de fibres (60) constitué de fibres électriquement conductrices (62), ladite couche chauffante (20) comprenant un film composite (50) avec une matrice polymère constituée d'un thermoplastique dans laquelle les fibres électriquement conductrices du réseau de fibres sont incorporées.

2. Panneau en sandwich selon la revendication 1, **caractérisé en ce que** la couche chauffante est un film composite de fibres (50) ayant un réseau de fibres (60) constitué de fibres de carbone incorporées dans le polymère de la matrice, les fibres électriquement conductrices étant de préférence incorporées dans un polymère de la matrice constitué d'un polyester thermoplastique.

3. Panneau en sandwich selon l'une des revendications 1 ou 2, **caractérisé en ce qu'**au moins une couche de couverture (12; 16), de préférence les deux couches de couverture, sont constituées d'un plastique composite à fibres (FRP), en particulier d'un composite de résine phénolique à fibres de verre.

4. Panneau en sandwich selon l'une des revendications 1 à 3, **caractérisé en ce que** la couche chauffante (20) est matériellement liée à la couche de couverture supérieure (12) et au noyau sandwich (14), en particulier par collage, de préférence par une couche adhésive thermoplastique (15).

5. Panneau en sandwich selon la revendication 4, **caractérisé en ce que** le noyau sandwich (14) est conçu de manière uniforme et sans interruption sur au moins la surface de base effective de la couche chauffante (20), en particulier sans interruption sur une partie prédominante de la surface de base du panneau; et/ou la couche chauffante présente un arrangement régulier de percées (52) pour améliorer la liaison adhésive entre la couche de couverture supérieure (12) et le noyau sandwich (14), en particulier une perforation d'une surface comprise entre 5 et 25 % de la mesure de la surface du réseau de fibres.

6. Panneau en sandwich selon l'une des revendications 1 à 5, **caractérisé en ce que** le noyau sandwich (14) est conçu comme un noyau en mousse à pores ouverts ou fermés en un matériau électriquement isolant et d'isolation thermique, en particulier en un matériau thermoplastique, de préférence en PET.

7. Panneau en sandwich selon l'une des revendications 1 à 6, **caractérisé en ce que** la structure en couches est constituée de:
- la couche de couverture supérieure (12) constituée d'un FCP, en particulier d'un composite de résine phénolique et de fibres de verre;
- la couche chauffante (20);
- le noyau sandwich (14) constitué d'une mousse, en particulier d'une mousse de PET ; et
- la couche de couverture supérieure (16);
dans lequel la couche de couverture supérieure (12) et une face supérieure du noyau sandwich (14) sont matériellement liées à la couche chauffante intercalée (20) par une ou plusieurs couches adhésives durcies (15), constituées en particulier d'un film adhésif thermoplastique, et la couche de couverture inférieure (16) et une face inférieure du noyau sandwich (14) sont matériellement liées par une couche adhésive durcie, constituée en particulier d'un film adhésif thermoplastique.

8. Panneau en sandwich selon l'une des revendications 1 à 7, **caractérisé en ce que** la couche chauffante (20) présente, sur deux côtés étroits opposés, un chemin conducteur (54, 56) qui s'étend sur la majeure partie de la longueur respective du côté étroit et auquel le réseau de fibres (60) est reliée électriquement, et **en ce que** la couche chauffante (20) présente une étendue longitudinale de ses côtés longitudinaux qui est au moins égale à 80% de la dimension correspondante du panneau.

9. Panneau en sandwich selon l'une des revendications 1 à 8, en particulier selon la revendication 7 ou 8, **caractérisé en ce que** tous les côtés étroits du panneau sandwich (10) présentent une fermeture de bord (18) électriquement isolant, au moins deux côtés étroits présentant un conduit de câbles, de préférence et en particulier un profilé creux (22).

10. Panneau en sandwich selon l'une des revendications 1 à 9, en particulier selon la revendication 7, **caractérisé en ce qu'**au moins un capteur de température (58) associé à la couche chauffante (20) est prévu sur l'une des deux couches de couverture (12, 16), en particulier encastré entre la couche de couverture supérieure (12) et le noyau sandwich.

11. Panneau en sandwich selon l'une des revendications 1 à 10, en particulier selon la revendication 7, **caractérisé en ce que** la couche chauffante (20) présente une ou plusieurs zones de surface, chacune avec un réseau bidimensionnel de fibres agissant comme résistance chauffante, ledit réseau de fibres (60) étant conçu comme un non-tissé, un canevas de fibre, un tissu tricoté ou un tissu à mailles, en particulier et de préférence comme un tissu non-tissé.

12. Panneau en sandwich selon l'une des revendications précédentes, en particulier selon la revendication 11, **caractérisé en ce que** les fibres électriquement conductrices du réseau de fibres (60) ont :
- une longueur de fibre comprise entre 1 mm et 20 mm, les fibres étant de préférence des fibres de carbone (62); et/ou
- un diamètre de < 100 m, les fibres étant de préférence des fibres de carbone (62) et ayant un diamètre compris entre 2,5 et 15 m.

13. Panneau en sandwich selon l'une des revendications précédentes, **caractérisé en ce que** les deux couches de couverture (12, 16) ont une hauteur totale plus faible que le noyau du sandwich (14) et/ou la couche chauffante (20) a une hauteur totale plus faible que la couche de couverture supérieure (12), en particulier les couches de couverture (12, 16) ayant une hauteur totale d'au moins 1,5 mm, de préférence au moins 2 mm, et la couche chauffante ayant une hauteur totale de maximum 20% de la couche de couverture (12, 16) associée.

14. Plaque de base (30; 40) destinée à être utilisée comme composant structurel porteur dans un véhicule ferroviaire, en particulier pour le service des passagers, comprenant un panneau en sandwich (10) selon l'une des revendications précédentes 1 à 13.

15. Utilisation d'un panneau en sandwich (10) selon l'une des revendications précédentes 1 à 13 comme composant structurel dans un véhicule, en particulier dans une plaque de base d'un véhicule ferroviaire.
